(19) Europäisches Patentamt / European Patent Office / Office européen des brevets

(11) **EP 3 521 073 B1**

(12) **FASCICULE DE BREVET EUROPEEN**

(45) Date de publication et mention
de la délivrance du brevet:
**18.11.2020 Bulletin 2020/47**

(51) Int Cl.:
**B60H 1/00** *(2006.01)* **B60H 1/32** *(2006.01)*

(21) Numéro de dépôt: **19153044.3**

(22) Date de dépôt: **22.01.2019**

(54) **CIRCUIT DE GESTION THERMIQUE D'UN VÉHICULE HYBRIDE**

THERMISCHER STEUERSCHALTKREIS EINES HYBRIDFAHRZEUGS

CIRCUIT FOR THERMAL MANAGEMENT OF A HYBRID VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.01.2018 FR 1850703**

(43) Date de publication de la demande:
**07.08.2019 Bulletin 2019/32**

(73) Titulaire: **VALEO SYSTEMES THERMIQUES
78320 Le Mesnil Saint-Denis (FR)**

(72) Inventeurs:
• **YAHIA, Mohamed
78322 Le Mesnil Saint-Denis Cedex (FR)**
• **KARL, Stefan
78322 Le Mesnil Saint-Denis Cedex (FR)**
• **GUIGOU, Pascal
78322 Le Mesnil Saint-Denis Cedex (FR)**

(74) Mandataire: **Tran, Chi-Hai et al
Valeo Systèmes Thermiques
BG THS - Service Propriété Industrielle THS
ZA L' Agiot, 8 rue Louis Lormand
CS 80517 La Verrière
78322 Le Mesnil Saint Denis Cedex (FR)**

(56) Documents cités:
EP-A2- 3 012 133  FR-A1- 3 036 744
US-A1- 2004 200 610

## Description

L'invention se rapporte au domaine des véhicules automobiles et plus particulièrement à un circuit de gestion thermique pour véhicule automobile hybride.

Dans le cas de véhicules automobiles dits thermiques, c'est-à-dire dont la propulsion est assurée par un moteur thermique, il est connu d'utiliser la chaleur générée par le moteur thermique pour chauffer l'habitacle en cas de besoin. Cependant, les véhicules automobiles hybrides comportent pour leur propulsion à la fois un moteur thermique et un ou plusieurs moteurs électriques. Lorsque le moteur thermique est à l'arrêt, il n'est donc pas possible d'utiliser la chaleur qu'il produit afin de chauffer l'habitacle. Afin de résoudre ce problème, il est connu d'équiper le véhicule d'une pompe à chaleur qui permet d'absorber de l'énergie calorifique dans un flux d'air extérieur et de la restituer dans un flux d'air interne afin de chauffer l'habitacle.

Afin de réduire les coûts et de limiter la consommation énergétique nécessaire afin de chauffer l'habitacle, il est également connu d'utiliser une pompe à chaleur indirecte c'est-à-dire comportant une première boucle de fluide réfrigérant récupérant l'énergie calorifique dans le flux d'air extérieur et la transférant à une deuxième boucle de fluide caloporteur qui la relâche dans le flux d'air interne par l'intermédiaire d'un échangeur de chaleur bifluide. La deuxième boucle de fluide caloporteur est également connectée au circuit de refroidissement du moteur thermique. Le document US2004200610 montre une telle architecture du circuit de gestion thermique. Il est ainsi possible de réchauffer l'habitacle via la pompe à chaleur lorsque le moteur thermique est à l'arrêt et via la chaleur du moteur thermique lorsque celui-ci est en marche. Cependant, ce genre de circuit de gestion thermique a comme inconvénient que lorsque le moteur thermique est à l'arrêt, la première boucle de fluide réfrigérant réchauffe le fluide caloporteur à une température qui est supérieure à celle du moteur thermique à l'arrêt. Une partie de la chaleur générée par la première boucle de fluide réfrigérant sera alors perdue et absorbée par le moteur thermique froid.

Un des buts de la présente invention est donc de remédier au moins partiellement aux inconvénients de l'art antérieur et de proposer un circuit de gestion thermique pour véhicule automobile hybride amélioré.

La présente invention concerne donc un circuit de gestion thermique d'un véhicule hybride, ledit circuit de gestion thermique comportant :

- une première boucle de circulation d'un fluide réfrigérant apte à fonctionner dans un mode de fonctionnement pompe à chaleur dans lequel le fluide réfrigérant absorbe de l'énergie calorifique dans un flux d'air extérieur,
- une deuxième boucle de circulation d'un fluide caloporteur comprenant :

  ◦ une première branche de circulation comportant dans le sens de circulation du fluide caloporteur, une pompe, un échangeur de chaleur moteur apte à échanger avec un moteur thermique et un premier radiateur externe disposé dans le flux d'air extérieur, et

  ◦ une deuxième branche de circulation disposée parallèlement à la première branche de circulation de sorte à contourner au moins le premier radiateur externe, ladite deuxième branche de circulation comportant dans le sens de circulation du fluide caloporteur :

    ▪ un échangeur de chaleur bifluide, agencé conjointement sur la première boucle de circulation et la deuxième branche de circulation et apte à permettre des échanges d'énergie calorifique entre le fluide réfrigérant et le fluide caloporteur, et

    ▪ un radiateur interne disposé dans un flux d'air interne, en aval de l'échangeur de chaleur bifluide,

ledit circuit de gestion thermique étant apte à fonctionner dans un mode de chauffage strict de l'habitacle dans lequel la première boucle de circulation est en mode pompe à chaleur et dans lequel en sortie de la pompe, le fluide caloporteur contourne le radiateur externe et passe dans la deuxième branche de circulation,
caractérisé en ce que dans ce mode de chauffage strict de l'habitacle, le débit de fluide caloporteur Mw est régulé de sorte que :

$$Mw = (Ma.Cpa.eff.(Twri – Tai)) / (Cpw.(Twri -Tm)$$

Ma étant le débit d'air traversant le radiateur interne, Cpa la capacité thermique de l'air, eff l'efficacité du radiateur interne, Twri la température d'entrée du fluide caloporteur en entrée du radiateur interne, Tai la température de l'air en entrée du radiateur interne, Cpw la capacité thermique du fluide caloporteur et Tm la température du moteur thermique.

Selon un aspect de l'invention, lors d'un démarrage à froid, le débit de fluide caloporteur Mw est régulé de sorte que :

$$Mw = (Ma.Cpa.eff) / Cpw$$

Selon un autre aspect de l'invention, la première boucle de circulation comporte dans le sens de circulation du fluide réfrigérant :

- un compresseur,
- l'échangeur de chaleur bifluide,
- un premier dispositif de détente, et
- un deuxième radiateur externe.

Selon un autre aspect de l'invention, la première boucle de circulation d'un fluide réfrigérant est apte à fonctionner dans un mode de fonctionnement de refroidissement dans lequel le fluide réfrigérant absorbe de l'énergie calorifique dans le flux d'air interne.
Selon un autre aspect de l'invention, la première boucle de circulation comporte en outre :

- un deuxième dispositif de détente, disposé en aval du deuxième radiateur externe,
- un évaporateur, disposé en aval du deuxième dispositif de détente, et
- une conduite de contournement (A1) de l'échangeur de chaleur bifluide.

Selon un autre aspect de l'invention, la deuxième branche de circulation comporte :

◦ un premier point de raccordement avec la première branche de circulation disposé entre la pompe et l'échangeur de chaleur moteur, et

◦ un deuxième point de raccordement avec la première branche de circulation disposé entre le premier radiateur externe et la pompe.

Selon un autre aspect de l'invention, la deuxième boucle de circulation comporte une troisième branche de circulation comportant dans le sens de circulation du fluide caloporteur :

◦ un premier point de raccordement disposé entre l'échangeur de chaleur moteur et le premier radiateur externe, et

◦ un deuxième point de raccordement disposé entre le premier point de raccordement de la deuxième branche de circulation et l'échangeur de chaleur bifluide.

Selon un autre aspect de l'invention, le circuit de gestion thermique est configuré pour fonctionner dans un mode de pré-chauffe du moteur thermique et de chauffage de l'habitacle dans lequel la première boucle de circulation est en mode pompe à chaleur et dans lequel en sortie de la pompe,

- une partie du fluide caloporteur passe dans la deuxième branche de circulation, le fluide caloporteur échangeant de l'énergie calorifique avec le flux d'air interne au niveau du radiateur interne,
- une autre partie du fluide caloporteur passe dans l'échangeur de chaleur moteur et retourne vers la deuxième branche de circulation via la troisième branche de circulation.

Selon un autre aspect de l'invention, le circuit de gestion thermique est configuré pour fonctionner dans un mode de pré-chauffe du moteur thermique dans lequel la première boucle de circulation est en mode pompe à chaleur et dans lequel en sortie de la pompe,

- une partie du fluide caloporteur passe dans la deuxième branche de circulation, le fluide caloporteur traversant le radiateur interne sans échanger de l'énergie calorifique avec le flux d'air interne,
- une autre partie du fluide caloporteur passe dans l'échangeur de chaleur moteur et retourne vers la deuxième branche de circulation via la troisième branche de circulation.

Selon un autre aspect de l'invention, le circuit de gestion thermique est configuré pour fonctionner dans un mode de refroidissement du moteur thermique et de chauffage de l'habitacle dans lequel la première boucle de circulation ne transfert pas d'énergie calorifique à la deuxième boucle de circulation et dans lequel en sortie de la pompe le fluide caloporteur passe dans l'échangeur de chaleur moteur, en sortie de l'échangeur de chaleur moteur,

- une partie du fluide caloporteur passe dans la troisième branche de circulation pour rejoindre la deuxième branche de circulation au niveau de laquelle le fluide caloporteur échange de l'énergie calorifique avec le flux d'air interne en traversant le radiateur interne avant de retourner vers la pompe,
- une autre partie du fluide caloporteur rejoint le premier radiateur externe avant de retourner vers la pompe.

D'autres caractéristiques et avantages de l'invention apparaîtront plus clairement à la lecture de la description suivante, donnée à titre d'exemple illustratif et non limitatif, et des dessins annexés parmi lesquels :

- la figure 1 montre une représentation schématique d'un circuit de gestion thermique selon un premier mode de réalisation,

- la figure 2 montre une représentation schématique d'un circuit de gestion thermique selon un deuxième mode de réalisation,

- la figure 3 montre une représentation schématique du circuit de gestion thermique de la figure 1 selon un premier mode de fonctionnement,

- la figure 4 montre une représentation schématique du circuit de gestion thermique de la figure 1 selon un deuxième mode de fonctionnement,

- la figure 5 montre une représentation schématique du circuit de gestion thermique de la figure 1 selon un troisième mode de fonctionnement,

- la figure 6 montre une représentation schématique du circuit de gestion thermique de la figure 1 selon un quatrième mode de fonctionnement.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

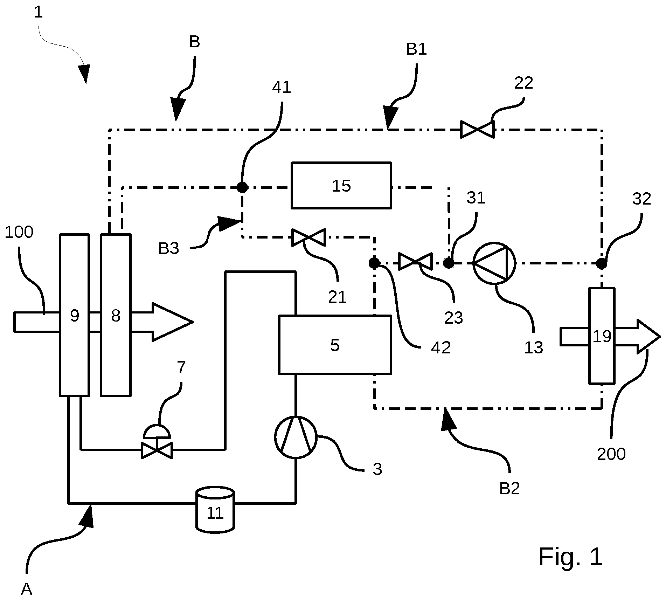

La figure 1 montre un circuit de gestion thermique 1 d'un véhicule hybride. Ce circuit de gestion thermique 1 comporte une première boucle de circulation A d'un fluide réfrigérant ainsi qu'une deuxième boucle de circulation B d'un fluide caloporteur. Ces deux boucles de circulation A et B sont en liaison thermique l'une avec l'autre de sorte que des échanges d'énergie calorifique puissent avoir lieu entre le fluide réfrigérant de la première boucle de circulation A et le fluide caloporteur de la deuxième boucle de circulation B. Pour cela, un échangeur de chaleur bifluide 5 est agencé conjointement sur la première A boucle de circulation et la deuxième boucle de circulation B. Cet échangeur de chaleur bifluide 5 est apte à permettre les échanges d'énergie calorifique entre le fluide réfrigérant et le fluide caloporteur.

La deuxième boucle de circulation B de fluide caloporteur comprend notamment :

  ◦ une première branche de circulation B1 comportant dans le sens de circulation du fluide caloporteur, une pompe 13, un échangeur de chaleur moteur 15 apte à échanger avec un moteur thermique et un premier radiateur externe 8 disposé dans le flux d'air extérieur 100, et
  ◦ une deuxième branche de circulation B2 disposée parallèlement à la première branche de circulation B1 de sorte à contourner au moins le premier radiateur externe 8.

Cette deuxième branche de circulation B2 comporte dans le sens de circulation du fluide caloporteur :

- l'échangeur de chaleur bifluide 5, et

- un radiateur interne 19 disposé dans un flux d'air interne 200, en aval de l'échangeur de chaleur bifluide 5.

Plus précisément, la deuxième branche de circulation B2 comporte :

◦ un premier point de raccordement 31 avec la première branche de circulation B1 disposé entre la pompe 13 et l'échangeur de chaleur moteur 15, et

◦ un deuxième point de raccordement 32 avec la première branche de circulation B1 disposé entre le premier radiateur externe 8 et la pompe 13.

La deuxième boucle de circulation B peut également comporter une troisième branche de circulation B3 comportant dans le sens de circulation du fluide caloporteur :

◦ un premier point de raccordement 41 disposé entre l'échangeur de chaleur moteur 15 et le premier radiateur externe 8, et

◦ un deuxième point de raccordement 42 disposé entre le premier point de raccordement 31 de la deuxième branche de circulation B2 et l'échangeur de chaleur bifluide 5.

Comme le montre la figure 1, la deuxième boucle de circulation B peut également comporter :

- une première vanne d'arrêt 21 disposée sur la troisième branche de circulation B3, et
- une deuxième vanne d'arrêt 22 disposée sur la première branche de circulation B1 en aval du premier radiateur externe 8, entre ledit premier radiateur externe 8 et le deuxième point de raccordement 32 de la deuxième branche de circulation B2, et
- une troisième vanne d'arrêt 23 disposée entre le premier point de raccordement 31 de la deuxième branche de circulation B2 et le deuxième point de raccordement 42 de la troisième branche de circulation B3.

Ces première 21, deuxième 22 et troisième 23 vannes d'arrêt permettent de définir la circulation du fluide caloporteur et ainsi contrôler dans quels éléments ledit fluide caloporteur circule.

Il est bien entendu tout à fait possible d'imaginer d'autres moyens de contrôle de la circulation du fluide caloporteur dans la deuxième boucle de circulation B sans sortir du cadre de l'invention.

Quant à elle, la première boucle de circulation A est plus particulièrement apte à fonctionner dans un mode de fonctionnement pompe à chaleur. Dans ce mode pompe à chaleur, le fluide réfrigérant absorbe de l'énergie calorifique dans un flux d'air extérieur 100, afin de le transférer au fluide caloporteur de la deuxième boucle de circulation B.

Comme illustré à la figure 1, pour cela, la première boucle de circulation A peut comporter dans le sens de circulation du fluide réfrigérant :

- un compresseur 3,
- l'échangeur de chaleur bifluide 5,
- un premier dispositif de détente 7, et
- un deuxième radiateur externe 9 disposé dans le flux d'air extérieur 100.

La première boucle de circulation A peut également comporter en amont du compresseur 3 un accumulateur 11 du fluide réfrigérant.

En mode pompe à chaleur, le compresseur 3 comprime le fluide réfrigérant et ce dernier passe ensuite dans l'échangeur de chaleur bifluide 5. Lors de son passage au travers de l'échangeur de chaleur bifluide, 5, le fluide réfrigérant cède de l'énergie calorifique au fluide caloporteur de la deuxième boucle de circulation B. Le fluide réfrigérant passe ensuite dans le premier dispositif de détente 7 et subit une perte de pression. Le fluide réfrigérant passe ensuite dans le deuxième radiateur externe 9 au niveau duquel il récupère de l'énergie calorifique en provenance du flux d'air extérieur 100 avant de retourner au compresseur 3.

La première boucle de circulation A peut également être une boucle de circulation apte à fonctionner dans un mode de fonctionnement de refroidissement dans lequel le fluide réfrigérant absorbe de l'énergie calorifique dans le flux d'air interne 200.

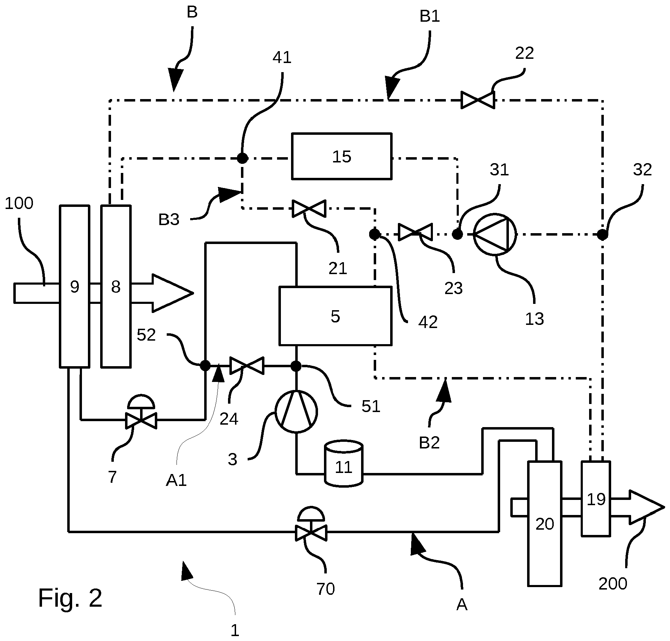

La figure 2 montre un exemple de première boucle de circulation A qui est apte à fonctionner dans ce mode de refroidissement. Pour cela, la première boucle de circulation A comporte en plus dans le sens de circulation du fluide réfrigérant :

• un deuxième dispositif de détente 70, disposé en aval du deuxième radiateur externe 9,
• un évaporateur 20, disposé en aval du deuxième dispositif de détente 70, et
• une conduite de contournement A1 de l'échangeur de chaleur bifluide 5.

Afin de contourner l'échangeur de chaleur bifluide 5, la conduite de contournement A1 comporte :

• un premier point de raccordement 51 disposé en aval du compresseur 3, entre ledit compresseur 3 et l'échangeur de chaleur bifluide 5, et
• un deuxième point de raccordement 52 disposé en aval de l'échangeur de chaleur bifluide 5.

Le deuxième point de raccordement de la conduite de contournement A1 peut, comme illustré sur la figure 2, être disposé entre l'échangeur de chaleur bifluide 5 et le premier dispositif de détente 7. Dans ce cas de figure, ledit premier dispositif de détente 7 est apte à être traversé par le fluide réfrigérant sans perte de pression.

Une alternative non représentée est que le deuxième point de raccordement 51 de la conduite de contournement A1 soit disposé en aval du premier dispositif de détente 7, entre ledit dispositif de détente 7 et le deuxième radiateur externe 9.

La conduite de contournement A1 peut également comporter une vanne d'arrêt 24 permettant le passage ou non du fluide réfrigérant afin de définir son trajet et s'il traverse ou non l'échangeur de chaleur bifluide 5. Il est bien sûr possible d'imaginer, sans sortir du cadre de l'invention, un système de contrôle du trajet du fluide réfrigérant différent, par exemple au moyen d'une vanne trois-voies au niveau du premier point de raccordement 51.

En mode de refroidissement, le fluide réfrigérant est comprimé au niveau du compresseur 3 et passe ensuite dans le deuxième radiateur externe 9 sans perte de pression via la conduite de contournement A1. Le fluide réfrigérant perd de l'énergie calorifique dans le flux d'air extérieur 100 en traversant le deuxième radiateur externe 9. Le fluide réfrigérant passe ensuite dans le deuxième dispositif de détente 70 au niveau duquel il subit une perte de pression. Le fluide réfrigérant traverse ensuite l'évaporateur 20 au niveau duquel il récupère de l'énergie calorifique en refroidissant le flux d'air interne 200. Le fluide réfrigérant rejoint ensuite le compresseur 3.

Toujours pour la conduite de contournement A1 de la figure 2, en mode pompe à chaleur, le compresseur 3 comprime le fluide réfrigérant et ce dernier passe ensuite dans l'échangeur de chaleur bifluide 5 sans passer par la conduite de contournement A1. Lors de son passage au travers de l'échangeur de chaleur bifluide 5, le fluide réfrigérant cède de l'énergie calorifique au fluide caloporteur de la deuxième boucle de circulation B. Le fluide réfrigérant passe ensuite dans le premier dispositif de détente 7 et subit une perte de pression. Le fluide réfrigérant passe ensuite dans le deuxième radiateur externe 9 au niveau duquel il récupère de l'énergie calorifique en provenance du flux d'air extérieur 100. Le fluide réfrigérant passe ensuite dans le deuxième dispositif de détente 70 qu'il traverse sans perte de pression. Le fluide réfrigérant passe ensuite dans l'évaporateur 20 qu'il traverse sans échanger d'énergie calorifique avec le flux d'air interne 200. Pour cela, le flux d'air interne peut être par exemple bloqué par un volet (non représenté) afin de ne pas passer dans l'évaporateur 20. Le fluide réfrigérant rejoint ensuite le compresseur 3.

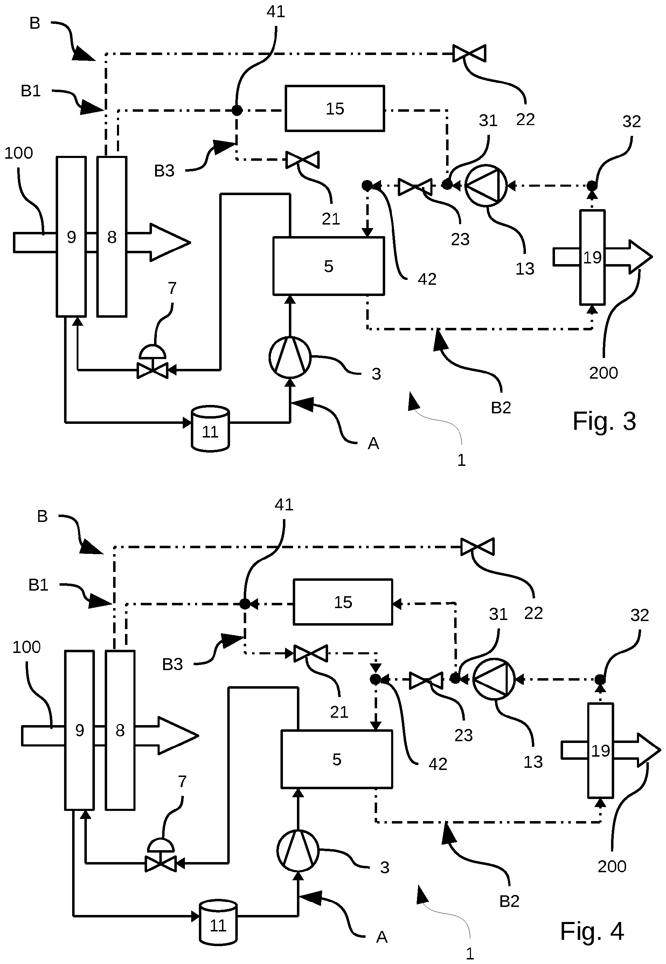

Lorsque la première boucle de circulation A est en mode pompe à chaleur, le circuit de gestion thermique 1 est notamment apte à fonctionner selon différents modes de fonctionnement illustrés aux figures 3 à 6.

1. mode de chauffage strict de l'habitacle

La figure 3 montre un premier mode de fonctionnement dit mode de chauffage strict de l'habitacle dans lequel, en sortie de la pompe 13, le fluide caloporteur contourne le radiateur externe 8 et passe dans la deuxième branche de circulation B2. Dans ce mode de chauffage strict de l'habitacle, le moteur thermique est à l'arrêt.

La première boucle de circulation A est en mode pompe à chaleur et l'énergie calorifique récupérée dans le flux d'air extérieur 100 est entièrement consacrée au chauffage du flux d'air interne 200.

Dans l'exemple particulier de la figure 3, le fluide caloporteur dans la deuxième boucle de circulation B passe successivement dans la pompe 13 et l'échangeur de chaleur bifluide 5 au niveau duquel le fluide caloporteur récupère de l'énergie calorifique en provenance du fluide réfrigérant. Le fluide caloporteur circule ensuite dans le radiateur interne 19 au niveau duquel il réchauffe le flux d'air interne 200 en lui cédant de l'énergie calorifique.

Le fluide caloporteur ne passe pas dans l'échangeur de chaleur moteur 15 ou dans la troisième branche de circulation B3 du fait que les première 21 et deuxième 22 vannes d'arrêt sont fermées. La troisième vanne d'arrêt 23 est quant à elle ouverte.

Afin que ce mode de fonctionnement n'impacte pas la gestion thermique du moteur thermique lorsque ce dernier sera en fonctionnement tout en permettant d'atteindre une température cible du flux d'air interne 200 afin de chauffer l'habitacle, le débit de fluide caloporteur Mw est régulé de sorte que :

$$Mw = (Ma.Cpa.eff.(Twri - Tai)) / (Cpw.(Twri -Tm))$$

Mw correspond au débit de fluide caloporteur circulant dans la deuxième branche de circulation B2, exprimé en Kg/h. Ce débit de fluide caloporteur Mw peut notamment être contrôler en jouant sur la vitesse de la pompe 13.

Ma correspond au débit d'air traversant le radiateur interne 19, exprimé en Kg/h. Ce débit d'air Ma peut être déterminé au moyen d'un capteur disposé dans le sens du flux d'air interne 200 en amont du radiateur interne 19 ou bien encore en fonction de la vitesse d'un ventilateur générant ledit flux d'air interne 200.

Cpa correspond à la capacité thermique de l'air, exprimée en J/Kg/K.

eff correspond à l'efficacité du radiateur interne 19,

Twri correspond à la température du fluide caloporteur en entrée du radiateur interne 19, exprimé en K. Cette température Twri peut être mesurée par un capteur de température disposé dans le sens du fluide réfrigérant en amont du radiateur interne 19.

Tai correspond à la température de l'air en entrée du radiateur interne 19, exprimé en K. Cette température Tai peut être mesurée par un capteur de température disposé dans le sens du flux d'air interne 200 en amont du radiateur interne 19. Cette température peut également être déterminée en fonction de la température extérieure du véhicule mesurée par un capteur si le flux d'air interne 200 est de l'air extérieur ou en fonction de la température interne du véhicule mesurée par un capteur si le flux d'air interne 200 est de l'air recirculé.

Cpw correspond à la capacité thermique du fluide caloporteur, exprimé en J/Kg/K.

Tm correspond à la température du moteur thermique, exprimé en K. Cette température Tm est notamment déterminée par un capteur disposé au niveau du moteur thermique.

En effet, la capacité de chauffage Hc du radiateur interne 19, exprimée en W ou J/s est définie selon deux formules :

$$formule~1) : Hc = Mcpw.(Twri - Twro)$$

Twro correspond à la température du fluide caloporteur en sortie du radiateur interne 19, exprimé en K.
Mcpw = Mw.Cpw.1/3600, Mcpw étant exprimé en W/K.

Donc Hc = Mw.Cpw.1/3600.(Twri - Twro)
et Mw = Hc / (Cpw.1/3600.(Twri - Twro))

$$formule~2) : Hc = Mcpa.(Tao - Tai)$$

Tao correspond à la température de l'air en sortie du radiateur interne 19, exprimé en K.
Mcpa = Ma.Cpa.1/3600, Mcpa étant exprimé en W/K.

$$Selon~une~troisième~formule~3) : (Tao - Tai) = eff.(Twri - Tai)$$

Ainsi la formule 2) peut également s'écrire :

$$Hc = Ma.Cpa.1/3600.eff.(Twri - Tai)$$

En combinant les formules 1) et 2) on obtient donc :

$$Mw = (Ma.Cpa.1/3600.eff.(Twri - Tai)) / (Cpw.1/3600.(Twri - Twro))$$

simplifié en Mw = (Ma.Cpa.eff.(Twri - Tai)) / (Cpw.(Twri - Twro))
Afin que la température du fluide caloporteur en sortie du radiateur interne 19 n'impacte pas la gestion thermique du moteur thermique, il faut ainsi que Twro = Tm.

Ainsi, Mw = (Ma.Cpa.eff.(Twri - Tai)) / (Cpw.(Twri -Tm))

Il est même également encore possible de simplifier cette équation notamment en utilisant un fluide caloporteur comme de l'eau glycolée qui a une capacité thermique Cpw proche de 3600 J/Kg/K.

Dans ce cas de figure, la formule 1) peut s'écrire :

Il est même également encore possible de simplifier cette équation notamment en utilisant un fluide caloporteur comme de l'eau glycolée qui a une capacité thermique Cpw proche de 3600 J/Kg/K.

Dans ce cas de figure, la formule 1) peut s'écrire :

$$Mw = Hc / (Twri - Twro)$$

Mw = Hc / (Twri - Twro)

Et donc on obtient au final dans ce cas de figure :

$$Mw = Mcpa.eff.(Twri - Tai)) / (Twri - Tm)$$

Dans le cas particulier où le véhicule automobile hybride opère un démarrage à froid, le débit de fluide caloporteur Mw peut être plus particulièrement régulé jusqu'à ce que le moteur thermique atteigne une plage de température optimale de fonctionnement de sorte que :

$$Mw = (Ma.Cpa.eff) / Cpw$$

En effet, lors d'un démarrage à froid, la température du moteur Tm est égale à la température de l'air extérieur donc à Tai.

Ainsi,

$$Mw = (Ma.Cpa.eff.(Twri - Tai)) / (Cpw.(Twri -Tai)) = (Ma.Cpa.eff) / Cpw$$

## 2. mode de pré-chauffe du moteur thermique et de chauffage de l'habitacle

Le circuit de gestion thermique 1 peut également fonctionner dans un mode de pré-chauffe du moteur thermique et de chauffage de l'habitacle, illustré à la figure 4.

Dans ce mode de fonctionnement, la première boucle de circulation A est en mode pompe à chaleur. Le moteur thermique est, quant à lui, en marche, mais est à une température inférieure à sa température de fonctionnement optimale. Ce mode de fonctionnement permet d'atteindre plus rapidement cette température de fonctionnement optimale tout en chauffant l'habitacle.

Au niveau de la deuxième boucle de circulation B, en sortie de la pompe 13, une partie du fluide caloporteur passe dans la deuxième branche de circulation B2. Le fluide caloporteur échange de l'énergie calorifique avec le flux d'air interne 200 au niveau du radiateur interne 19 afin de réchauffer le flux d'air interne 200 et donc l'habitacle.

Une autre partie du fluide caloporteur passe quant à elle dans l'échangeur de chaleur moteur 15 et retourne vers la deuxième branche de circulation B2 via la troisième branche de circulation B3. Une partie de l'énergie calorifique récupérée de la pompe à chaleur de la première boucle de circulation A est donc utilisée pour réchauffer le moteur thermique via l'échangeur de chaleur moteur 15.

Dans l'exemple de la figure 4, afin que le fluide caloporteur suive ce trajet, la première vanne d'arrêt 21 et la troisième vanne d'arrêt 23 sont ouvertes. La deuxième vanne d'arrêt 22 est quant à elle fermée.

## 3. mode de pré-chauffe du moteur thermique

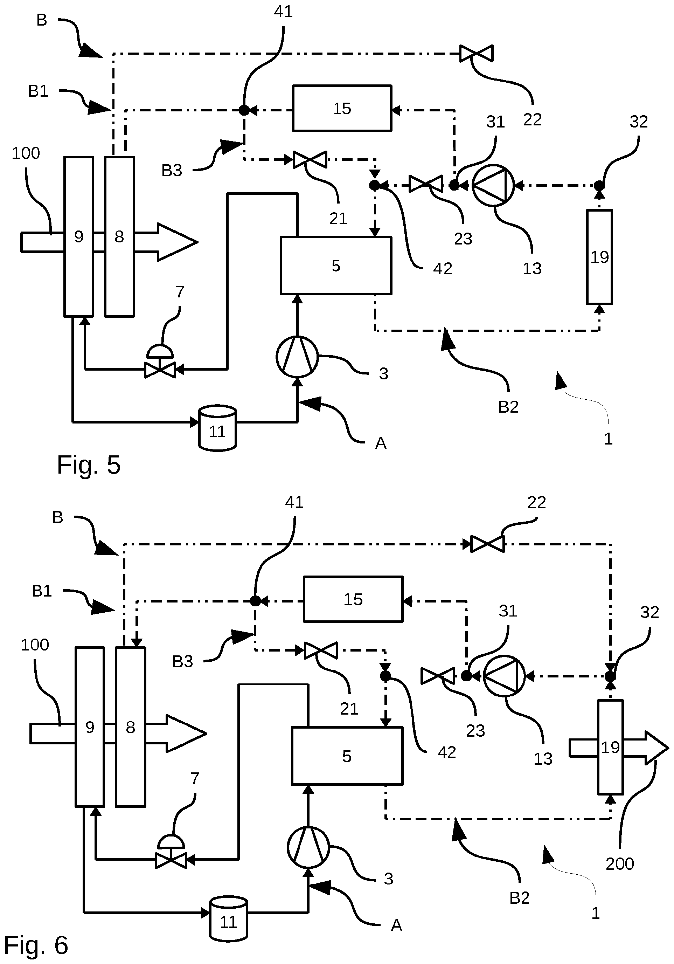

Le circuit de gestion thermique 1 peut également fonctionner dans un mode de pré-chauffe du moteur thermique, illustré à la figure 5.

Dans ce mode de fonctionnement, la première boucle de circulation A est en mode pompe à chaleur. Le moteur thermique est quant à lui en marche, mais est à une température inférieure à sa température de fonctionnement optimale. Ce mode de fonctionnement permet d'atteindre plus rapidement cette température de fonctionnement optimale.

Au niveau de la deuxième boucle de circulation B, en sortie de la pompe 13, une partie du fluide caloporteur passe dans la deuxième branche de circulation B2. Le fluide caloporteur traverse le radiateur interne 19 cependant sans échanger d'énergie calorifique avec le flux d'air interne 200. Cela est possible par exemple en bloquant le flux d'air interne 200 au moyen d'un volet afin qu'il ne traverse pas le radiateur interne 19.

Une autre partie du fluide caloporteur passe dans l'échangeur de chaleur moteur 15 et retourne vers la deuxième branche de circulation B2 via la troisième branche de circulation B3. L'énergie calorifique récupérée de la pompe à chaleur de la première boucle de circulation A est donc utilisée pour réchauffer le moteur thermique via l'échangeur de chaleur moteur 15.

Dans l'exemple de la figure 5, afin que le fluide caloporteur suive ce trajet, la première vanne d'arrêt 21 et la troisième vanne d'arrêt 23 sont ouvertes. La deuxième vanne d'arrêt 22 est quant à elle fermée.

### 4. mode de refroidissement du moteur thermique et de chauffage de l'habitacle

Le circuit de gestion thermique 1 peut également fonctionner dans un mode de refroidissement du moteur thermique et de chauffage de l'habitacle, illustré à la figure 6.

Dans ce mode de fonctionnement, la première boucle de circulation A ne transfert pas d'énergie calorifique à la deuxième boucle de circulation B, par exemple du fait que ladite première boucle de circulation A soit à l'arrêt ou que le fluide réfrigérant ne traverse pas l'échangeur de chaleur bifluide 5. Le moteur thermique est quant à lui en marche et doit être refroidi afin d'être maintenu proche de sa température optimale de fonctionnement.

Au niveau de la deuxième boucle de circulation B, en sortie de la pompe 13 le fluide caloporteur passe dans l'échangeur de chaleur moteur 15 et en sortie de ce dernier, une partie du fluide caloporteur passe dans la troisième branche de circulation B3 pour rejoindre la deuxième branche de circulation B2. Le fluide caloporteur traverse alors l'échangeur de chaleur bifluide 5 sans échanger d'énergie calorifique et traverse ensuite le radiateur interne 19. Le fluide caloporteur échange de l'énergie calorifique avec le flux d'air interne 200 en traversant le radiateur interne 19 avant de retourner vers la pompe 13.

Une autre partie du fluide caloporteur en sortie de l'échangeur de chaleur moteur 15 rejoint le premier radiateur externe 8 au niveau duquel il cède de l'énergie calorifique au flux d'air extérieur 100 avant de retourner vers la pompe 13.

Les deux flux de fluide caloporteur se rejoignent en amont de la pompe 13 au niveau du deuxième point de raccordement 32 de la deuxième branche de circulation B2.

L'énergie calorifique dégagée par le moteur thermique est ainsi évacuée dans le flux d'air extérieur 100 au niveau du premier radiateur externe 8, mais également dans le flux d'air interne 200 au niveau du radiateur interne 19 afin de réchauffer l'habitacle.

Dans l'exemple de la figure 6, afin que le fluide caloporteur suive ce trajet, la première vanne d'arrêt 21 et la deuxième vanne d'arrêt 22 sont ouvertes. La troisième vanne d'arrêt 23 est quant à elle fermée.

Ainsi, on voit bien que le circuit de gestion thermique 1 selon l'invention de par son mode de gestion permet de ne pas ou peu impacter sur la gestion thermique du moteur thermique. De plus, de par son architecture, le circuit de gestion thermique 1 permet un fonctionnement selon différents modes de fonctionnements.

### Revendications

1. Circuit de gestion thermique (1) d'un véhicule hybride, ledit circuit de gestion thermique (1) comportant :

• une première boucle de circulation (A) d'un fluide réfrigérant apte à fonctionner dans un mode de fonctionnement pompe à chaleur dans lequel le fluide réfrigérant absorbe de l'énergie calorifique dans un flux d'air extérieur (100),
• une deuxième boucle de circulation (B) d'un fluide caloporteur comprenant :

◦ une première branche de circulation (B1) comportant dans le sens de circulation du fluide caloporteur, une pompe (13), un échangeur de chaleur moteur (15) apte à échanger avec un moteur thermique et un premier radiateur externe (8) disposé dans le flux d'air extérieur (100), et
◦ une deuxième branche de circulation (B2) disposée parallèlement à la première branche de circulation (B1) de sorte à contourner au moins le premier radiateur externe (8), ladite deuxième branche de circulation (B2) comportant dans le sens de circulation du fluide caloporteur :

▪ un échangeur de chaleur bifluide (5), agencé conjointement sur la première boucle de circulation (A) et la deuxième branche de circulation (B2) et apte à permettre des échanges d'énergie calorifique entre le fluide réfrigérant et le fluide caloporteur, et

▪ un radiateur interne (19) disposé dans un flux d'air interne (200), en aval de l'échangeur de chaleur bifluide (5),

ledit circuit de gestion thermique (1) étant apte à fonctionner dans un mode de chauffage strict de l'habitacle dans lequel la première boucle de circulation (A) est en mode pompe à chaleur et dans lequel en sortie de la pompe (13), le fluide caloporteur contourne le radiateur externe (8) et passe dans la deuxième branche de circulation (B2),

**caractérisé en ce que** dans ce mode de chauffage strict de l'habitacle, le débit de fluide caloporteur Mw est régulé de sorte que :

$$Mw = (Ma.Cpa.eff.(Twri - Tai)) / (Cpw.(Twri - Tm)$$

Ma étant le débit d'air traversant le radiateur interne (19), Cpa la capacité thermique de l'air, eff l'efficacité du radiateur interne (19), Twri la température d'entrée du fluide caloporteur en entrée du radiateur interne (19), Tai la température de l'air en entrée du radiateur interne (19), Cpw la capacité thermique du fluide caloporteur et Tm la température du moteur thermique.

2.  Circuit de gestion thermique (1) selon la revendication 1, **caractérisé en ce que** lors d'un démarrage à froid, le débit de fluide caloporteur Mw est régulé de sorte que :

$$Mw = (Ma.Cpa.eff) / Cpw$$

3.  Circuit de gestion thermique (1) selon l'une des revendications précédentes, **caractérisé en ce que** la première boucle de circulation (A) comporte dans le sens de circulation du fluide réfrigérant :

• un compresseur (3),
• l'échangeur de chaleur bifluide (5),
• un premier dispositif de détente (7), et
• un deuxième radiateur externe (9).

4.  Circuit de gestion thermique (1) selon la revendication précédente, **caractérisé en ce que** la première boucle de circulation (A) d'un fluide réfrigérant est apte à fonctionner dans un mode de fonctionnement de refroidissement dans lequel le fluide réfrigérant absorbe de l'énergie calorifique dans le flux d'air interne (200).

5.  Circuit de gestion thermique (1) selon la revendication précédente, **caractérisé en ce que** la première boucle de circulation (A) comporte en outre :

• un deuxième dispositif de détente (70), disposé en aval du deuxième radiateur externe (9),
• un évaporateur (20), disposé en aval du deuxième dispositif de détente (70), et
• une conduite de contournement (A1) de l'échangeur de chaleur bifluide (5).

6.  Circuit de gestion thermique (1) selon l'une des revendications précédentes, **caractérisé en ce que** la deuxième branche de circulation (B2) comporte :

◦ un premier point de raccordement (31) avec la première branche de circulation (B1) disposé entre la pompe (13) et l'échangeur de chaleur moteur (15), et
◦ un deuxième point de raccordement (32) avec la première branche de circulation (B1) disposé entre le premier radiateur externe (8) et la pompe (13).

7.  Circuit de gestion thermique (1) selon la revendication précédente, **caractérisé en ce que** la deuxième boucle de circulation (B) comporte une troisième branche de circulation (B3) comportant dans le sens de circulation du fluide caloporteur :

◦ un premier point de raccordement (41) disposé entre l'échangeur de chaleur moteur (15) et le premier radiateur externe (8), et
∘ un deuxième point de raccordement (42) disposé entre le premier point de raccordement (31) de la deuxième branche de circulation (B2) et l'échangeur de chaleur bifluide (5).

8. Circuit de gestion thermique (1) selon la revendication 7, **caractérisé en ce qu'**il est configuré pour fonctionner dans un mode de pré-chauffe du moteur thermique et de chauffage de l'habitacle dans lequel la première boucle de circulation (A) est en mode pompe à chaleur et dans lequel en sortie de la pompe (13),

- une partie du fluide caloporteur passe dans la deuxième branche de circulation (B2), le fluide caloporteur échangeant de l'énergie calorifique avec le flux d'air interne (200) au niveau du radiateur interne (19),
- une autre partie du fluide caloporteur passe dans l'échangeur de chaleur moteur (15) et retourne vers la deuxième branche de circulation (B2) via la troisième branche de circulation (B3).

9. Circuit de gestion thermique (1) selon la revendication 7, **caractérisé en ce qu'**il est configuré pour fonctionner dans un mode de pré-chauffe du moteur thermique dans lequel la première boucle de circulation (A) est en mode pompe à chaleur et dans lequel en sortie de la pompe (13),

- une partie du fluide caloporteur passe dans la deuxième branche de circulation (B2), le fluide caloporteur traversant le radiateur interne (19) sans échanger de l'énergie calorifique avec le flux d'air interne (200),
- une autre partie du fluide caloporteur passe dans l'échangeur de chaleur moteur (15) et retourne vers la deuxième branche de circulation (B2) via la troisième branche de circulation (B3).

10. Circuit de gestion thermique (1) selon l'une des revendications 6 ou 7, **caractérisé en ce qu'**il est configuré pour fonctionner dans un mode de refroidissement du moteur thermique et de chauffage de l'habitacle dans lequel la première boucle de circulation (A) ne transfert pas d'énergie calorifique à la deuxième boucle de circulation (B) et dans lequel en sortie de la pompe (13) le fluide caloporteur passe dans l'échangeur de chaleur moteur (15), en sortie de l'échangeur de chaleur moteur (15),

- une partie du fluide caloporteur passe dans la troisième branche de circulation (B3) pour rejoindre la deuxième branche de circulation (B2) au niveau de laquelle le fluide caloporteur échange de l'énergie calorifique avec le flux d'air interne (200) en traversant le radiateur interne (19) avant de retourner vers la pompe (13),
- une autre partie du fluide caloporteur rejoint le premier radiateur externe (8) avant de retourner vers la pompe (13).

## Patentansprüche

1. Wärmesteuerungskreis (1) eines Hybridfahrzeugs, wobei der Wärmesteuerungskreis (1) Folgendes umfasst:

- eine erste Schleife (A) für die Zirkulation eines Kältemittelfluids, die in einer Wärmepumpenbetriebsart arbeiten kann, in der das Kältemittelfluid Wärmeenergie in einem Außenluftstrom (100) absorbiert,
- eine zweite Schleife (B) für die Zirkulation eines Wärmeträgerfluids, die Folgendes umfasst:

∘ einen ersten Zirkulationszweig (B1), der in Richtung der Zirkulation des Wärmeträgerfluids eine Pumpe (13), einen Maschinenwärmetauscher (15), der mit einer Brennkraftmaschine Wärme tauschen kann, und einen ersten äußeren Kühlkörper (8), der in dem Außenluftstrom (100) angeordnet ist, enthält, und
∘ einen zweiten Zirkulationszweig (B2), der parallel zu dem ersten Zirkulationszweig (B1) angeordnet ist, derart, dass er wenigstens den ersten äußeren Kühlkörper (8) umgeht, wobei der zweite Zirkulationszweig (B2) in Richtung der Zirkulation des Wärmeträgerfluids Folgendes enthält:

■ einen Doppelfluidwärmetauscher (5), der sowohl in der ersten Zirkulationsschleife (A) als auch in der zweiten Zirkulationsschleife (B2) angeordnet ist und jeweils einen Wärmeenergieaustausch zwischen dem Kältemittelfluid und dem Wärmeträgerfluid ermöglichen kann, und
■ einen inneren Kühlkörper (19), der in einem Innenluftstrom (200) stromabseitig des Doppelfluidwärmetauschers (5) angeordnet ist,

wobei der Wärmesteuerungskreis (1) in einer Betriebsart ausschließlich zum Heizen des Fahrgastraums arbeiten kann, in der die erste Zirkulationsschleife (A) in der Wärmepumpenbetriebsart ist und in der am Ausgang der Pumpe (13) das Wärmeträgerfluid den äußeren Kühlkörper (8) umgeht und sich in dem zweiten Zirkulationszweig (B2) bewegt,

**dadurch gekennzeichnet, dass** in dieser Betriebsart ausschließlich zum Heizen des Fahrgastraums der Durchsatz Mw des Wärmeträgerfluids in der Weise reguliert wird, dass:

$$Mw = (Ma \cdot Cpa \cdot eff \cdot (Twri - Tai))/(Cpw \cdot (Twri - Tm))$$

wobei Ma der Luftdurchsatz durch den inneren Kühlkörper (19) ist, Cpa die spezifische Wärmekapazität von Luft ist, eff der Wirkungsgrad des inneren Kühlkörpers (19) ist, Twri die Eingangstemperatur des Wärmeträgerfluids am Eingang des inneren Kühlkörpers (19) ist, Tai die Temperatur der Luft am Eingang des inneren Kühlkörpers (19) ist, Cpw die spezifische Wärmekapazität des Wärmeträgerfluids ist und Tm die Temperatur der Brennkraftmaschine ist.

2. Wärmesteuerungskreis (1) nach Anspruch 1, **dadurch gekennzeichnet, dass** bei einem Kaltstart der Durchsatz Mw des Wärmeträgerfluids in der Weise reguliert wird, dass:

$$Mw = (Ma \cdot Cpa \cdot eff)/Cpw.$$

3. Wärmesteuerungskreis (1) nach einem der vorhergehenden Ansprüche, **dadurch gekennzeichnet, dass** die erste Zirkulationsschleife (A) in Richtung der Zirkulation des Kältemittelfluids Folgendes umfasst:

   • einen Kompressor (3),
   • den Doppelfluidwärmetauscher (5),
   • eine erste Entspannungsvorrichtung (7) und
   • einen zweiten äußeren Kühlkörper (9).

4. Wärmesteuerungskreis (1) nach dem vorhergehenden Anspruch, **dadurch gekennzeichnet, dass** die erste Zirkulationsschleife (A) für ein Kältemittelfluid in einer Kühlungsbetriebsart arbeiten kann, in der das Kältemittelfluid die Wärmeenergie in dem Innenluftstrom (200) absorbiert.

5. Wärmesteuerungskreis (1) nach dem vorhergehenden Anspruch, **dadurch gekennzeichnet, dass** die erste Zirkulationsschleife (A) außerdem Folgendes umfasst:

   • eine zweite Entspannungsvorrichtung (70), die stromabseitig des zweiten äußeren Kühlkörpers (9) angeordnet ist,
   • einen Verdampfer (20), der stromabseitig der zweiten Entspannungsvorrichtung (70) angeordnet ist, und
   • eine Leitung (A1) für die Umgehung des Doppelfluidwärmetauschers (5).

6. Wärmesteuerungskreis (1) nach einem der vorhergehenden Ansprüche, **dadurch gekennzeichnet, dass** der zweite Zirkulationszweig (B2) Folgendes umfasst:

   ○ einen ersten Verbindungspunkt (31) mit dem ersten Zirkulationszweig (B1), der zwischen der Pumpe (13) und dem Maschinenwärmetauscher (15) angeordnet ist, und
   ○ einen zweiten Verbindungspunkt (32) mit dem ersten Zirkulationszweig (B1), der zwischen dem ersten äußeren Kühlkörper (8) und der Pumpe (13) angeordnet ist.

7. Wärmesteuerungskreis (1) nach dem vorhergehenden Anspruch, **dadurch gekennzeichnet, dass** die zweite Zirkulationsschleife (B) einen dritten Zirkulationszweig (B3) umfasst, der in Richtung der Zirkulation des Wärmeträgerfluids Folgendes umfasst:

   ○ einen ersten Verbindungspunkt (41), der zwischen dem Maschinenwärmetauscher (15) und dem ersten äußeren Kühlkörper (8) angeordnet ist, und
   ○ einen zweiten Verbindungspunkt (42), der zwischen dem ersten Verbindungspunkt (31) des zweiten Zirkulationszweigs (B2) und dem Doppelfluidwärmetauscher (5) angeordnet ist.

8. Wärmesteuerungskreis (1) nach Anspruch 7, **dadurch gekennzeichnet, dass** er konfiguriert ist, in einer Betriebsart zum Vorwärmen der Brennkraftmaschine und zum Heizen des Fahrgastraums zu arbeiten, in der die erste Zirkulationsschleife (A) in der Wärmepumpenbetriebsart ist und in der am Ausgang der Pumpe (13)

• ein Teil des Wärmeträgerfluids sich in dem zweiten Zirkulationszweig (B2) bewegt, wobei das Wärmeträgerfluid die Wärmeenergie mit dem Innenluftstrom (200) auf Höhe des inneren Kühlkörpers (19) austauscht,
• ein weiterer Teil des Wärmeträgerfluids sich durch den Maschinenwärmetauscher (15) bewegt und durch den dritten Zirkulationszweig (B3) zu dem zweiten Zirkulationszweig (B2) zurückkehrt.

9. Wärmesteuerungskreis (1) nach Anspruch 7, **dadurch gekennzeichnet, dass** er konfiguriert ist, in einer Betriebsart zum Vorwärmen der Brennkraftmaschine zu arbeiten, in der die erste Zirkulationsschleife (A) in der Wärmepumpenbetriebsart ist und in der am Ausgang der Pumpe (13)

• ein Teil des Wärmeträgerfluids sich durch den zweiten Zirkulationszweig (B2) bewegt, wobei das Wärmeträgerfluid den inneren Kühlkörper (19) durchquert, ohne Wärmeenergie mit dem Innenluftstrom (200) auszutauschen,
• ein weiterer Teil des Wärmeträgerfluids sich durch den Maschinenwärmetauscher (15) bewegt und durch den dritten Zirkulationszweig (B3) zu dem zweiten Zirkulationszweig (B2) zurückkehrt.

10. Wärmesteuerungskreis (1) nach einem der Ansprüche 6 oder 7, **dadurch gekennzeichnet, dass** er konfiguriert ist, in einer Betriebsart zum Kühlen der Brennkraftmaschine und zum Erwärmen des Fahrgastraums zu arbeiten, in der die erste Zirkulationsschleife (A) die Wärmeenergie nicht an die zweite Zirkulationsschleife (B) überträgt und in der am Ausgang der Pumpe (13) das Wärmeträgerfluid sich durch den Maschinenwärmetauscher (15) bewegt, wobei am Ausgang des Maschinenwärmetauschers (15)

• ein Teil des Wärmeträgerfluids sich durch den dritten Zirkulationszweig (B3) bewegt, um sich mit dem zweiten Zirkulationszweig (B2) zu vereinigen, auf dessen Höhe das Wärmeträgerfluid Wärmeenergie mit dem Innenluftstrom (200) austauscht, indem es den inneren Kühlkörper (19) durchquert, bevor es zu der Pumpe (13) zurückkehrt,
• ein weiterer Teil des Wärmeträgerfluids sich mit dem ersten äußeren Kühlkörper (8) vereinigt, bevor es zu der Pumpe (13) zurückkehrt.

**Claims**

1. Heat management circuit (1) for a hybrid vehicle, said heat management circuit (1) comprising:

• a first flow loop (A) for a refrigerant fluid that is able to operate in a heat pump operating mode in which the refrigerant fluid absorbs calorific energy from an external air flow (100),
• a second flow loop (B) for a heat transfer fluid comprising:

o a first flow branch (B1) comprising, in the flow direction of the heat transfer fluid, a pump (13), an engine heat exchanger (15) that is able to exchange with a heat engine and a first external radiator (8) arranged in the external air flow (100), and
o a second flow branch (B2) arranged parallel to the first flow branch (B1) so as to bypass at least the first external radiator (8), said second flow branch (B2) comprising, in the flow direction of the heat transfer fluid:

▪ a two-fluid heat exchanger (5) arranged jointly on the first flow loop (A) and the second flow branch (B2) and able to permit exchanges of calorific energy between the refrigerant fluid and the heat transfer fluid, and
▪ an internal radiator (19) arranged in an internal air flow (200), downstream of the two-fluid heat exchanger (5),

said heat management circuit (1) being able to operate in a mode of strict heating of the passenger compartment in which the first flow loop (A) is in the heat pump mode and in which, upon leaving the pump (13), the heat transfer fluid bypasses the external radiator (8) and passes into the second flow loop (B2), **characterized in that**, in this mode of strict heating of the passenger compartment, the flow rate of heat transfer fluid Mw is regulated in such a way that:

$$Mw = (Ma.Cpa.eff.(Twri-Tai))/(Cpw.(Twri-Tm))$$

where Ma is the flow rate of air passing through the internal radiator (19), Cpa is the heat capacity of the air, eff is the efficiency of the internal radiator (19), Twri is the inlet temperature of the heat transfer fluid as it enters the internal radiator (19), Tai is the temperature of the air as it enters the internal radiator (19), Cpw is the heat capacity of the heat transfer fluid, and Tm is the temperature of the heat engine.

2.  Heat management circuit (1) according to Claim 1, **characterized in that**, during a cold start, the flow rate of heat transfer fluid Mw is regulated in such a way that:

$$Mw=(Ma.Cpa.eff)/Cpw$$

3.  Heat management circuit (1) according to either of the preceding claims, **characterized in that** the first flow loop (A) comprises, in the direction of flow of the refrigerant fluid:

    • a compressor (3),
    • the two-fluid heat exchanger (5),
    • a first expansion device (7), and
    • a second external radiator (9).

4.  Heat management circuit (1) according to the preceding claim, **characterized in that** the first flow loop (A) for a refrigerant fluid is able to operate in a cooling operating mode in which the refrigerant fluid absorbs calorific energy from the internal air flow (200).

5.  Heat management circuit (1) according to the preceding claim, **characterized in that** the first flow loop (A) further comprises:

    • a second expansion device (70) arranged downstream of the second external radiator (9),
    • an evaporator (20), arranged downstream of the second expansion device (70), and
    • a bypass duct (A1) for bypassing the two-fluid heat exchanger (5).

6.  Heat management circuit (1) according to one of the preceding claims, **characterized in that** the second flow branch (B2) comprises:

    o a first connection point (31) with the first flow branch (B1), this connection point being arranged between the pump (13) and the engine heat exchanger (15), and
    o a second connection point (32) with the first flow branch (B1), this connection point being arranged between the first external radiator (8) and the pump (13).

7.  Heat management circuit (1) according to the preceding claim, **characterized in that** the second flow loop (B) comprises a third flow branch (B3) comprising, in the direction of flow of the heat transfer fluid:

    o a first connection point (41) arranged between the engine heat exchanger (15) and the first external radiator (8), and
    o a second connection point (42) arranged between the first connection point (31) of the second flow branch (B2) and the two-fluid heat exchanger (5).

8.  Heat management circuit (1) according to Claim 7, **characterized in that** it is configured to operate in a mode of preheating the heat engine and of heating the passenger compartment, in which the first flow loop (A) is in the heat pump mode and in which, upon leaving the pump (13),

    • one part of the heat transfer fluid passes into the second flow branch (B2), the heat transfer fluid exchanging calorific energy with the internal air flow (200) at the internal radiator (19),
    • another part of the heat transfer fluid passes into the engine heat exchanger (15) and returns towards the second flow branch (B2) via the third flow branch (B3).

9. Heat management circuit (1) according to Claim 7, **characterized in that** it is configured to operate in a mode of preheating the heat engine, in which the first flow loop (A) is in the heat pump mode and in which, upon leaving the pump (13),

> • one part of the heat transfer fluid passes into the second flow branch (B2), the heat transfer fluid passing through the internal radiator (19) without exchanging calorific energy with the internal air flow (200),
> • another part of the heat transfer fluid passes into the engine heat exchanger (15) and returns towards the second flow branch (B2) via the third flow branch (B3).

10. Heat management circuit (1) according to either of Claims 6 and 7, **characterized in that** it is configured to operate in a mode of cooling the heat engine and of heating the passenger compartment, in which the first flow loop (A) does not transfer calorific energy to the second flow loop (B), and in which, upon leaving the pump (13), the heat transfer fluid passes into the engine heat exchanger (15) and, upon leaving the engine heat exchanger (15),

> • one part of the heat transfer fluid passes into the third flow branch (B3) to join up with the second flow branch (B2) at which the heat transfer fluid exchanges calorific energy with the internal air flow (200) as it passes through the internal radiator (19) before returning towards the pump (13),
> • another part of the heat transfer fluid joins up with the first external radiator (8) before returning towards the pump (13).

Fig. 1

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004200610 A